# EUROPÄISCHE PATENTSCHRIFT

(11) **EP 2 207 975 B1**
(45) Veröffentlichungstag und Bekanntmachung des Hinweises auf die Patenterteilung: **02.03.2011**
(21) Anmeldenummer: 08850692.8
(22) Anmeldetag: 29.10.2008
(51) Int. Cl.: F16B 13/06, F16B 13/08

(54) **BEFESTIGUNGSELEMENT**
FIXING ELEMENT
ÉLÉMENT DE FIXATION

(30) Priorität: 17.11.2007 DE 102007054972
(43) Veröffentlichungstag der Anmeldung: 21.07.2010
(73) Patentinhaber: fischerwerke GmbH & Co. KG, 72178 Waldachtal (DE)
(72) Erfinder: KAUPP, Andreas, 72280 Dornstetten (DE)
(74) Vertreter: Suchy, Ulrich Johannes
(86) Internationale Anmeldenummer: PCT/EP2008/009115
(87) Internationale Veröffentlichungsnummer: WO 2009/062599

(56) Entgegenhaltungen:
- WO-A-2004/072495
- FR-A- 2 868 817

## Beschreibung

Die Erfindung betrifft ein Befestigungselement mit den Merkmalen des Oberbegriffs des Anspruchs 1.

Befestigungselemente zur klemmenden Befestigung in Bohrlöchern, die Spreizelemente aufweisen, die durch einen sich in Einsteckrichtung erweiternden Querschnitt gespreizt werden, sind bekannt. Insbesondere handelt es sich bei diesen Befestigungselementen um so genannte Nagelanker, die aus einem Schaft, einem Spreizkonus, einem hülsenförmigen Spreizelement und einem den Schaft abschließenden Abschnitt bestehen, mit dem Gegenstände gehalten oder festgespannt werden können. Aus der Druckschrift DE 35 26 784 ist ein derartiges Befestigungselement bekannt, das zur Montage eingeschlagen wird. Das Spreizelement besteht aus einer im Durchmesser elastisch verformbaren Federhülse, die sich beim Einschlagen des Befestigungselements im Bohrloch verspannt. Wird das Befestigungselement durch eine äußere Last auf Zug belastet, so wird der Spreizkonus in die verspannte Hülse hinein gezogen, wodurch sich der Anpressdruck der Hülse gegen die Bohrlochwand erhöht. Der Anker kann hierdurch hohe Lasten aufnehmen und auf den ihn umgebenden Beton übertragen. Allerdings ist zur Aufnahme der Last ein relativ großer Verschiebeweg des Spreizkonus und des damit verbundenen Schafts notwendig. Häufig ist der Verschiebeweg so groß, dass ein Anpressen des Gegenstandes gegen den Untergrund nicht mehr gewährleistet ist. Dies gilt sowohl für den Verschiebeweg unter Versagenslast als auch für den Verschiebeweg unter Gebrauchslast. Unter Gebrauchslast ist die Last zu verstehen, mit der das Befestigungselement beaufschlagt werden kann, bei der ein definierter Sicherheitsabstand zwischen Gebrauchs- und Versagenslast eingehalten wird. Eine reduzierte Klemmwirkung des Befestigungsmittels unter Gebrauchslast ist allerdings für die Gebrauchstauglichkeit des Befestigungsmittels nachteilig.

Aufgabe der Erfindung ist, ein Befestigungselement der beschriebenen Gattung vorzuschlagen, dessen Verschiebeweg unter Gebrauchslast reduziert ist.

Diese Aufgabe wird erfindungsgemäß durch die Merkmale des Anspruchs 1 gelöst. Das Befestigungselement weist neben einem ersten Verankerungselement, mit einem Spreizelement und einem sich in Einsteckrichtung erweiternden Querschnitt, ein zweites Verankerungselement als Blockierelement auf. Das Blockierelement überträgt die auf das Befestigungselement wirkende Last auf den das Befestigungselement umgebenden Baustoff, beispielsweise mittels Kraftschluss, wobei mit dem Begriff Blockierelement zum Ausdruck kommen soll, dass dieses nach dem Setzen sofort, also ohne Verschiebeweg in Auszugsrichtung, seine maximale Tragkraft (Versagenslast) entfaltet. Zur Übertragung der Last ist es somit zunächst nicht notwendig, dass der sich in Einsteckrichtung erweiternde Querschnitt des Schafts des Befestigungselements das Spreizelement aufspreizt. Dies wiederum bedeutet, dass eine Verschiebung des Befestigungselements entgegen der Einsteckrichtung zur Übertragung der Last auf den umgebenden Baustoff nicht erforderlich ist. Erst nach Überschreiten einer definierten Last, bei der ein Versagen des Blockierelements eintritt, kann eine Verschiebung des Befestigungselements aus dem Bohrloch heraus erfolgen. Der Verschiebeweg ist dann so groß, dass das im Bohrloch verklemmte Spreizelement des ersten Verankerungselements durch den sich in Einsteckrichtung erweiternden Querschnitt des Befestigungselements radial geweitet und gegen die Wand des Bohrlochs gepresst wird. Die Versagenslast des ersten Verankerungselements liegt weit über der Versagenslast des Blockierelements. Sie entspricht der Versagenslast des Befestigungselements, wohingegen die Versagenslast des Blockierelements im Idealfall der Gebrauchslast des Befestigungselements entspricht. In diesem Fall kann die Gebrauchslast des Befestigungselements praktisch ohne Verschiebeweg voll ausgenutzt werden, wobei eine ausreichend große Sicherheit gegen Versagen des gesamten Befestigungselements vorhanden ist. Das Blockierelement kann zudem als Verdrehsicherung für das Befestigungselement wirken.

Eine bevorzugte Ausführungsform des erfindungsgemäßen Befestigungselements weist ein Blockierelement auf, dessen Durchmesser größer als der Nenndurchmesser des Befestigungselements ist. Unter Durchmesser ist bei nicht kreisförmigen Querschnitten der Durchmesser eines in radialer Ebene zur Längsachse des Befestigungselements liegenden, das Blockierelement umschreibenden Kreises zu verstehen. Der Nenndurchmesser des Befestigungselements entspricht dem Nenndurchmesser des Bohrers mit dem das Bohrloch in den Baustoff eingebracht wurde. Durch den gegenüber dem Nenndurchmesser vergrößerten Durchmesser des Blockierelements ist gewährleistet, dass ein Kraftschluss zwischen Bohrloch und Blockierelement entstehen kann.

Bei einer weiteren bevorzugten Ausführungsform des erfindungsgemäßen Befestigungselements ist das Blockierelement in radialer Richtung zur Längsachse des Befestigungselements elastisch verformbar. Durch Eintreiben des Befestigungselements in das Bohrloch wird das Blockierelement radial zusammengedrückt. Durch die elastische Ausgestaltung ist das Blockierelement bestrebt seine ursprüngliche Form wieder anzunehmen. Hierdurch bewirkt es einen Anpressdruck an die Bohrlochwand, so dass zwischen Bohrloch und Befestigungselement in diesem Bereich eine Haftreibkraft erzeugt wird, die eine Verschiebung des Befestigungselements in Richtung des Kraftvektors verhindert. Die elastische Verformbarkeit des Blockierelements kann beispielsweise dadurch erreicht werden, dass in den Schaft des Befestigungselements eine in Längsrichtung der Achse des Befestigungsmittels verlaufende Nut eingepresst ist. Hierdurch wird ein Hohlraum im Bereich der Längsachse gebildet und das Material des Schafts ist in diesem Bereich nach außen versetzt angeordnet, wodurch der Durchmesser des Blockierelements vergrößert ist. Das Blockierelement wirkt durch die Nut und das nach außen versetzt angeordnete Material wie eine elastische Feder. Denkbar ist auch, das Befestigungselement durch ein elastisches Material, beispielsweise einen Kunststoff zu umhüllen, oder das Befestigungselement mit über den Schaft gezogenen elastischen Ringen oder elastischen Fächerscheiben zu versehen.

Die Erfindung wird nachfolgend anhand eines Ausführungsbeispiels näher erläutert.

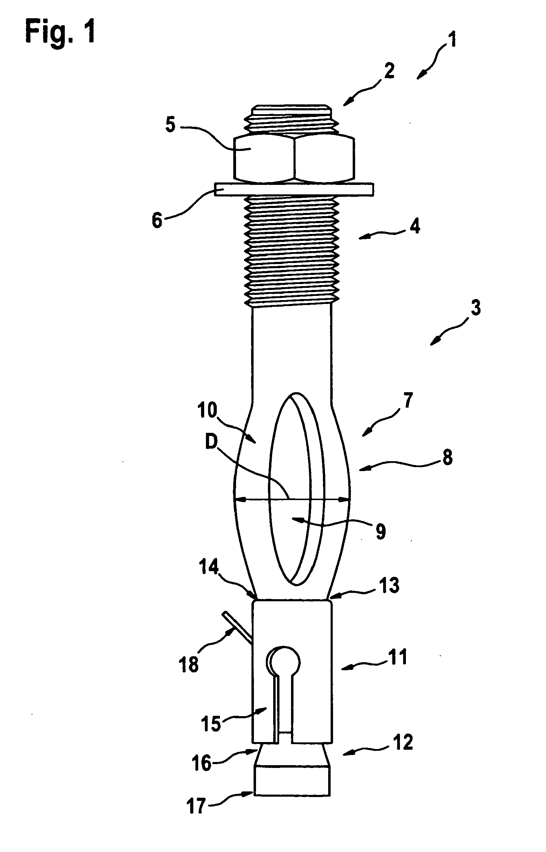

In Figur 1 ist ein erfindungsgemäßes Befestigungselement 1 zur klemmenden Befestigung in einem nicht dargestellten Bohrloch in einer Seitenansicht dargestellt. Das Befestigungselement 1 weist an seinem in Einsteckrichtung hinteren Teil 2 eines Schafts 3 ein Mittel 4 zum Halten oder Festspannen eines nicht dargestellten Gegenstandes auf, hier in Form eines Gewindeabschnitts mit einer Mutter 5 und mit einer Unterlegscheibe 6. Daran schließt sich in Einsteckrichtung ein Blockierelement 7 an. Der Außendurchmesser D des Blockierelements 7 ist größer als der Nenndurchmesser des Befestigungselements 1. Das Blockierelement 7 weist einen elastischen Bereich 8 auf, der in radialer Richtung elastisch verformbar ist. Dieser elastische Bereich 8 besteht aus einer in den Schaft 3 eingeprägten Nut 9 und zwei durch das Einprägen der Nut 9 gebildeten Federschenkeln 10. Es ist auch denkbar, dass das Blockierelement 7 statt einer Nut 9 eine den Schaft 3 durchdringende Öffnung aufweist. Durch Einführen des Befestigungselements 1 in ein nicht dargestelltes Bohrloch werden die Federschenkel 10 zusammengedrückt. Durch die elastische Federwirkung werden die Federschenkel 10 gegen die Bohrlochwand gedrückt, wodurch sie über Kraftschluss mit der Bohrlochwand als Blockierelement 7 wirken.

An das Blockierelement 7 schließt sich in Einsteckrichtung das erste Verankerungselement an, das aus einem Spreizelement 11, hier in Form einer Spreizhülse, und einem sich in Einsteckrichtung erweiternden Querschnitt 12, hier in Form eines Spreizkonus, besteht. Das Spreizelement 11 liegt beim Einschlagen des Befestigungselements 1 mit seiner der Einsteckrichtung abgewandten Querschnittsfläche 13 an einer Schulter 14 des Schafts 3 an. Es ist an seinem in Einsteckrichtung vorderen Ende in Längsrichtung geschlitzt. Die Schlitze unterteilen seinen vorderen Teil in mehrere Spreizzungen 15. Das Spreizelement 11 bestimmt den Nenndurchmesser des Befestigungselements 1. Das Befestigungselement 1 weist an seinem in Einsteckrichtung vorderen Ende den sich in Einsteckrichtung erweiternden Querschnitt 12 auf, der aus einem ersten, konischen Teil 16 und einem zweiten, zylindrischen Teil 17 besteht. Das Spreizelement 11 weist einen abstehenden Dom 18 auf, der als Widerhaken in die Bohrlochwand eingreift und das Spreizelement 11 im Bohrloch verhakt.

Wird das in ein Bohrloch gesetzte Befestigungselement 1 durch eine Zugkraft belastet, so überträgt zunächst das Blockierelement 7 die Zugkraft über die Bohrlochwand durch Kraftschluss in den Untergrund, ohne dass es zu einer Verschiebung kommt. Nach Versagen des Blockierelements 7 verschiebt sich der Schaft 3 des Befestigungselements 1 entgegen der Einsteckrichtung aus dem Bohrloch. Hierdurch wird der sich erweiternde Querschnitt 12 in das ortsfest im Bohrloch verhakte Spreizelement 11 gezogen und die Spreizzungen 15 werden gegen die Bohrlochwand gedrückt. Durch den so erzeugten Anpressdruck kann das Spreizelement 11 eine höhere Last in den Untergrund übertragen als dies mit dem Blockierelement 7 möglich ist.

### Bezugszeichenliste

### Befestigungselement

- 1: Befestigungselement
- 2: hinterer Teil des Befestigungselements 1
- 3: Schaft
- 4: Mittel zum Halten oder Festspannen eines Gegenstandes
- 5: Mutter
- 6: Unterlegscheibe
- 7: Blockierelement
- 8: elastischer Bereich
- 9: Nut
- 10: Federschenkel
- 11: Spreizelement
- 12: sich in Einsteckrichtung erweiternder Querschnitt
- 13: Querschnittsfläche des Spreizelements
- 14: Schulter
- 15: Spreizzungen
- 16: konischer Teil des Querschnitts 12
- 17: zylindrischer Teil des Querschnitts 12
- 18: abstehender Dorn

## Patentansprüche

1. Befestigungselement (1) zur klemmenden Befestigung in Bohrlöchern, bestehend aus einem Schaft (3) der ein erstes Verankerungselement mit einem Spreizelement (11) und einem sich in Einsteckrichtung erweiternden Querschnitt (12), sowie an seinem in Einsteckrichtung hinteren Teil (2) Mittel (4) zum Halten oder Festspannen eines Gegenstandes aufweist, **dadurch gekennzeichnet, dass** am Befestigungselement (1) ein zweites Verankerungselement als Blockierelement (7) zur kraftschlüssigen Verbindung zwischen Bohrloch und Befestigungselement (1) angeordnet ist, das eine der Einsteckrichtung entgegengerichtete Verschiebung des Befestigungselements (1) verhindert.

2. Befestigungselement nach Anspruch 1, **dadurch gekennzeichnet, dass** der Durchmesser des Blockierelements (7) größer als der Nenndurchmesser des Befestigungselements (1) ist.

3. Befestigungselement nach Anspruch 2, **dadurch gekennzeichnet, dass** das Blockierelement (7) in radialer Richtung elastisch verformbar ist.

4. Befestigungselement nach Anspruch 3, **dadurch gekennzeichnet, dass** das Blockierelement (7) eine in Längsrichtung verlaufende Nut (9) aufweist.

## Claims

1. Fixing element (1) for clamped fixing in drilled holes, consisting of a shank (3) which has a first anchoring element having an expansion element (11) and having a cross-section (12) that widens in the direction of insertion, and which has on its rear portion (2), viewed in the direction of insertion, means (4) for holding or tightly fixing an article in place, **characterized in that** a second anchoring element is arranged on the fixing element (1) as blocking element (7) for a force-fitting connection between drilled hole and fixing element (1), which second anchoring element prevents displacement of the fixing element (1) in a direction opposite to the direction of insertion.

2. Fixing element according to claim 1, **characterized in that** the diameter of the blocking element (7) is greater than the nominal diameter of the fixing element (1).

3. Fixing element according to claim 2, **characterized in that** the blocking element (7) is resiliently deformable in the radial direction.

4. Fixing element according to claim 3, **characterized in that** the blocking element (7) has a longitudinal groove (9).

## Revendications

1. Elément de fixation (1) dédié à la fixation dans des trous forés, par effet de coincement, constitué d'une tige (3) présentant un premier élément d'ancrage qui est muni d'un élément déployable (11) et d'une section transversale (12) s'élargissant dans la direction d'emboîtement, et est pourvu, sur sa partie (2) postérieure dans ladite direction d'emboîtement, de moyens (4) dévolus à la retenue ou à la consignation à demeure d'un objet, **caractérisé par le fait qu'**un second élément d'ancrage, disposé sur ledit élément de fixation (1) et remplissant la fonction d'un élément de blocage (7) conçu pour instaurer la liaison mécanique entre le trou foré et ledit élément de fixation (1), interdit un déplacement dudit élément de fixation (1) en sens inverse de la direction d'emboîtement.

2. Elément de fixation selon la revendication 1, **caractérisé par le fait que** le diamètre de l'élément de blocage (7) est supérieur au diamètre nominal dudit élément de fixation (1).

3. Elément de fixation selon la revendication 2, **caractérisé par le fait que** l'élément de blocage (7) est élastiquement déformable dans le sens radial.

4. Elément de fixation selon la revendication 3, **caractérisé par le fait que** l'élément de blocage (7) comporte une zone évidée (9) s'étendant dans le sens longitudinal.
